# EUROPEAN PATENT SPECIFICATION

(11) **EP 2 444 764 B1**
(45) Date of publication and mention of the grant of the patent: **08.08.2018**
(21) Application number: 10789409.9
(22) Date of filing: 09.06.2010
(51) Int. Cl.: F25D 27/00, F21V 8/00, G02B 6/00, F25D 23/06

(54) **REFRIGERATOR**
KÜHLSCHRANK
RÉFRIGÉRATEUR

(30) Priority: 15.06.2009 JP 2009141940; 15.06.2009 JP 2009141945; 15.06.2009 JP 2009141993; 15.06.2009 JP 2009141994
(43) Date of publication of application: 25.04.2012
(73) Proprietor: Sharp Kabushiki Kaisha, Osaka-shi, Osaka 545-8522 (JP)
(72) Inventor: SAKAI, Moriyuki, Osaka-shi, Osaka 545-8522 (JP); TORATANI, Kohji, Osaka-shi, Osaka 545-8522 (JP); TAKAHASHI, Yasuyuki, Osaka-shi, Osaka 545-8522 (JP); AOYAMA, Haruka, Osaka-shi, Osaka 545-8522 (JP); HASEGAWA, Yuya, Osaka-shi, Osaka 545-8522 (JP); SATA, Naoki, Osaka-shi, Osaka 545-8522 (JP); HAYAMA, Masafumi, Osaka-shi, Osaka 545-8522 (JP)
(74) Representative: Treeby, Philip David William
(86) International application number: PCT/JP2010/059741
(87) International publication number: WO 2010/147034

(56) References cited:
- EP-A1- 1 882 974
- DE-A1-102005 057 154
- JP-A- 5 039 978
- JP-A- H0 539 978
- JP-A- 10 179 348
- JP-A- 2000 258 051
- JP-A- 2001 066 051
- JP-A- 2001 066 051
- JP-A- 2003 279 977
- JP-A- 2005 344 975
- JP-A- 2005 344 976
- JP-A- 2006 336 985
- JP-A- 2007 059 285
- JP-A- 2008 039 358
- JP-A- 2008 039 358
- JP-A- 2008 051 366
- US-A1- 2008 236 183

## Description

### Technical Field

The present invention is related to a refrigerator that illuminates the inside of a storage compartment by using an LED (light emitting diode).

### Background Art

Conventional refrigerators are disclosed in Patent Literatures 1 and 2. The refrigerators each have a plurality of LEDs for illuminating a storage compartment in which articles are stored. The LEDs are arranged in an up-down direction in front parts of both side walls of the storage compartment.

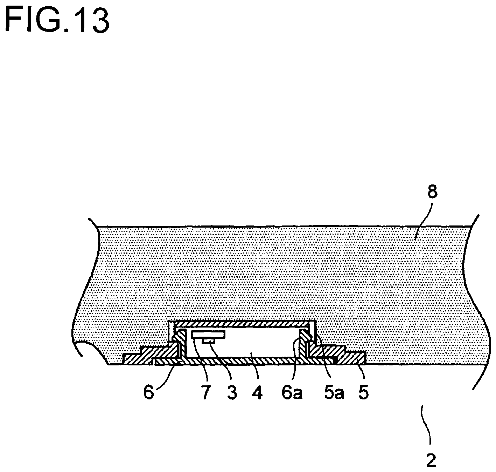

FIG. 13 is a top sectional view showing the front part of a side wall of a storage compartment. An illumination chamber 4 is formed as a recess in a side wall 8 of a storage compartment 2; the side wall 8 is filled with heat insulating material, and the illumination chamber 4 faces the storage compartment 2 and extends in an up-down direction. The wall surface of the illumination chamber 4 is formed of a frame 5 which is integrally formed with the side wall 8. A mount board 7 on which an LED 3 is mounted is attached to the frame 5. A lamp cover 6 formed of transparent resin is arranged to cover the front of the illumination chamber 4. The lamp cover 6 is fixed by claws 6a that engage in holes 5a formed in the frame 5.

When a door of the storage compartment 2 is opened, the LED 3 is energized, and light emitted from the LED 3 passes through the lamp cover 6. Thereby, the storage compartment 2 is illuminated from its front part.

JP2008 039358 which discloses the preamble of claim 1, relates to an arrangement in which a plurality of white LEDs are installed in a refrigerating chamber being mounted to a mounting substrate in a vertical direction of the refrigerating chamber. The back face of the lamp cover covering the mounting substrate is formed in transverse wave shape in front of the white LEDs and formed in longitudinal wave shape in the rear of the white LEDs.

JP05039978 relates to a lighting system composed of a light guide, a light source, a reflector, a shielding plate and a slit. Most of the light generated from the light source is reflected and converged on the reflector and transmitted to the light guide.

### Citation List

### Patent Literature

[Patent Literature1] JP-A- 2007-187363 (Page 3 - Page 6, FIG. 2)
[Patent Literature2] JP-A- 2008-89277 (Page 4 - Page 6, FIG. 2)

### Summary of Invention

### Technical Problem

However, according to the above-mentioned conventional refrigerators, since the light from the LED 3 is emitted rearward from the front part of the storage compartment 2, a shadow is formed behind an article placed in the storage compartment 2 while the article is being irradiated with the light coming from in front of it. This disadvantageously diminishes the visibility of an article placed in a rear part of the storage compartment 2.

An object of the present invention is to provide a refrigerator capable of improving the visibility of articles stored therein.

To achieve the above object, according to one aspect of the present invention, there is provided a refrigerator as set out in claim 1. Here, an inside of the storage compartment is illuminated with light that is guided in the light guide plates and emitted from the light guide plates.

According to this structure, light emitted from the LEDs arranged in the front part of the storage compartment enters the light guide plates arranged along the side walls of the storage compartment. Light that enters the light guide plates is reflected on surfaces of the light guide plates to be guided to the rear part of the storage compartment. Light that is guided in the light guide plates and reaches the surfaces of the light guide plates at an incident angle that is smaller than a critical angle is emitted from the light guide plates toward the inside of the storage compartment or toward the side walls of the storage compartment. Light that is emitted toward the side walls of the storage compartment is reflected on the side walls to be emitted into the storage compartment via the light guide plates.

According to the present invention, in the refrigerator structured as described above, it is preferable that the LEDs be disposed facing front surfaces of the light guide plates. According to this structure, light emitted rearward from the LEDs enters the light guide plates through the front surfaces of the light guide plates.

According to the present invention, in the refrigerator structured as described above, it is preferable that the light guide plates have inclined surfaces that are formed in front parts of the light guide plates at storage-compartment sides, rear parts of the inclined surfaces being inclined toward the storage-compartment sides, and that the LEDs be disposed facing side-wall sides of the light guide plates and opposite to the inclined surfaces. According to this structure, light that is emitted in a right-left direction from the LEDs toward the inside of the storage compartment enters the light guide plates from a side direction. Light that enters the light guide plates is reflected on the inclined surfaces to be guided rearward.

According to the present invention, in the refrigerator structured as described above, it is preferable that the light guide plates have bent portions formed by bending front parts of the light guide plates toward outer sides of the storage compartment, with the LEDs disposed opposite to end surfaces of the bent portions.

According to this structure, the light guide plates are arranged along the side walls inside the storage compartment, and the front parts of the light guide plates are bent outward in a right-left direction to thereby form the bent portions. The LEDs which face the end surfaces of the bent portions are arranged at the front part of the storage compartment, and light emitted from the LEDs enters the light guide plates through the end surfaces of the bent portions. Light that enters the light guide plates are reflected on the surfaces of the light guide plates to be guided to the rear part of the storage compartment.

According to the present invention, it is preferable that the refrigerator structured as described above further comprise a metal panel that covers a rear surface of the storage compartment, and that stepped portions that face the rear part of the storage compartment be formed in the light guide plates at storage-compartment sides of the light guide plates. According to this structure, light that is guided in the light guide plates is emitted rearward from the stepped portions to be reflected by the metal panel arranged at the rear surface of the storage compartment.

According to the present invention, in the refrigerator structured as described above, it is preferable that the stepped portions be formed in front parts of the light guide plates.

According to the present invention, in the refrigerator structured as described above, it is preferable that a removable tray on which an article is placed be provided inside the storage compartment, and that a distance between the light guide plates, which are located apart from each other in a right-left direction, be larger at a front part of the storage compartment than at the rear part of the storage compartment. According to this structure, since the distance between the light guide plates in the right-left direction is large at the front part of the storage compartment, it is possible for the tray to be taken out of the storage compartment without hitting the stepped portions arranged at the front part of the storage compartment.

According to the present invention, it is preferable that the refrigerator structured as described above further include a cold air passage through which cold air for cooling the storage compartment passes, a front side of the cold air passage being covered with the metal panel. According to this structure, cold air that passes through the cold air passage is discharged into the storage compartment, and the cold of the cold air that passes through the cold air passage is transmitted to the storage compartment via the metal panel.

According to another aspect of the present invention, there is a refrigerator as set out in claim 9. Here, an inside of the storage compartment is illuminated with light that is guided in the light guide plates and emitted from the light guide plates.

According to this structure, light emitted from the LEDs that are arranged at the rear part of the storage compartment enters the light guide plates that are arranged along the side walls of the storage compartment. Light that enters the light guide plates are reflected on the surfaces of the light guide plates to be guided to the rear part of the storage compartment. Light that is guided in the light guide plates and reaches the surfaces of the light guide plates at an incident angle that is smaller than a critical angle is emitted from the light guide plates toward the inside of the storage compartment or toward the side walls of the storage compartment. Light that is emitted toward the side walls of the storage compartment is reflected on the side walls to be emitted into the storage compartment via the light guide plates.

According to the present invention, it is preferable that the refrigerator structured as described above further include a duct panel that covers a rear surface of the storage compartment and forms a cold air passage. Here, the LEDs are attached to the duct panel.

According to the present invention, in the refrigerator structured as described above, it is preferable that illumination chambers in which the LEDs are disposed be formed as recesses in corners between a rear wall of the storage compartment and the side walls of the storage compartment.

According to the present invention, in the refrigerator structured as described above, it is preferable that the light guide plates have, at rear parts thereof, bent portions which are bent toward outer sides of the storage compartment, and that the LEDs be disposed opposite to end surfaces of the bent portions. According to this structure, the rear parts of the light guide plates are bent outward in a right-left direction to form the bent portions. The LEDs face the end surfaces of the bent portions, and light emitted from the LEDs enters the light guide plates through the end surfaces of the bent portions.

According to the present invention, in the refrigerator structured as described above, it is preferable that a metal panel be provided at a rear surface of the storage compartment. According to this structure, light emitted from the LEDs enters the light guide plates with part of the light being reflected by the metal panel to illuminate the inside of the storage compartment from its rear surface.

According to the present invention, it is preferable that the refrigerator structured as described above further include a plurality of transparent trays that are arranged inside the storage compartment and on which an article is placed. Here, the LEDs are disposed in vicinity of the trays. According to this structure, light emitted from the LEDs enters the light guide plates with part of the light entering the transparent trays. Light that enters the trays are guided in the trays, and part of the light that reaches surfaces of the trays at an incident angle that is smaller than the critical angle is emitted from the trays. With the thus emitted light, the article is illuminated from above and below.

According to the present invention, in the refrigerator structured as described above, it is preferable that the light guide plates have rough-surface portions that extend in a rear-front direction facing the side walls. According to this structure, in the light guide plates, the rough-surface portions that extend in the rear-front direction and each have a saw-edged cross section are formed facing the side walls of the storage compartment, and light emitted from the surfaces of the rough-surface portions is reflected on the side walls to illuminate the inside of the storage compartment.

According to the present invention, in the refrigerator structured as described above, it is preferable that transparent lamp covers that cover the LEDs be provided between the LEDs and the light guide plates, and that the lamp covers have parts thereof located ahead of the LEDs so processed as to reduce visibility of the LEDs. According to this structure, light emitted from the LEDs passes through the transparent lamp cover and enters the light guide plates. The lamp covers have parts thereof located ahead of the LEDs so processed as to reduce visibility of the LEDs by, for example, silk printing or non-glare surface treatment. This helps prevent cables of the LEDs and the like from being visually recognized, and thus helps improve the appearance of the inside of the storage compartment.

According to the present invention, in the refrigerator structured as described above, it is preferable that non-transparent lamp covers that cover the LEDs be provided between the LEDs and the light guide plates, and that holes through which the LEDs are placed be formed in the lamp covers. According to this structure, the LEDs are placed through the holes of the lamp covers, and light emitted from the LEDs directly enters the light guide plates. The lamp cover is non-transparent, and this helps prevent the cables of the LEDs and the like from being visually recognized, and thus helps improve the appearance of the inside of the storage compartment.

According to the present invention, in the refrigerator structured as described above, it is preferable that the light guide plates be made of polystyrene resin.

### Advantageous Effects of Invention

According to the present invention, since the light guide plates, which guides light emitted from the LEDs to the rear part of the storage compartment, are arranged along both the side walls of the storage compartment, it is possible to illuminate articles placed in the front and rear parts of the storage compartment from a side direction. It is also possible to illuminate articles placed in the front and rear portions of the storage compartment 2 from front and behind. Thus, it is possible to prevent a shadow of an article from being cast over another article placed behind the article to degrade the visibility thereof, and thus it is possible to improve the visibility of the articles stored in the storage compartment.

### Brief Description of Drawings

[FIG. 1] A perspective view showing a refrigerator according to a first embodiment of the present invention;
[FIG. 2] A diagram showing part of the refrigerator shown in FIG. 1, as seen in the direction of arrow A;
[FIG. 3] A sectional view taken along line B-B of FIG. 2;
[FIG. 4] A perspective view showing a light guide plate of the refrigerator according to the first embodiment of the present invention;
[FIG. 5] A perspective view showing another light guide plate of the refrigerator according to the first embodiment of the present invention;
[FIG. 6] A top sectional view showing a side wall of a storage compartment of a refrigerator according to a second embodiment of the present invention;
[FIG. 7] A top sectional view showing a side wall of a storage compartment of a refrigerator according to a third embodiment of the present invention;
[FIG. 8] A top sectional view showing a side wall of a storage compartment of a refrigerator according to a fourth embodiment of the present invention;
[FIG. 9] A side sectional view showing the inside of a storage compartment of a refrigerator according to a fifth embodiment of the present invention;
[FIG. 10] A front view showing a duct panel of the refrigerator according to the fifth embodiment of the present invention;
[FIG. 11] A sectional view taken along line C-C of FIG. 10 and showing the inside of the storage compartment;
[FIG. 12] A top sectional view showing a side wall of a storage compartment of a refrigerator according to a sixth embodiment of the present invention; and
[FIG. 13] A top sectional view showing a side wall of a storage compartment of a conventional refrigerator.

### Description of Embodiments

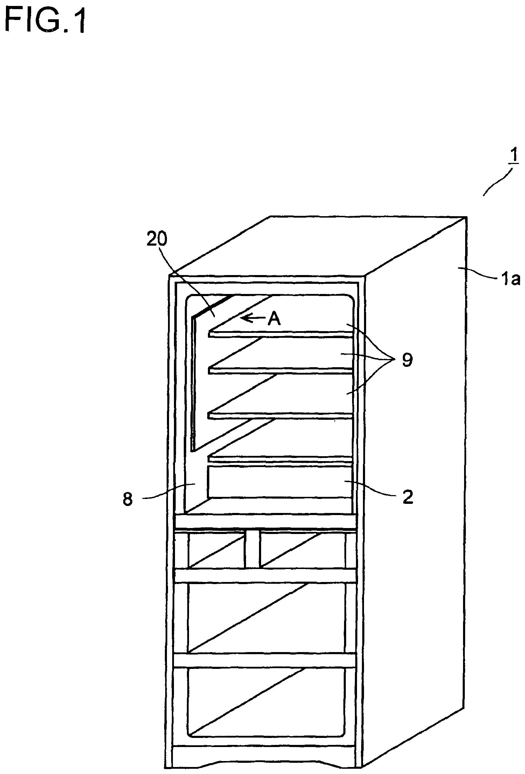

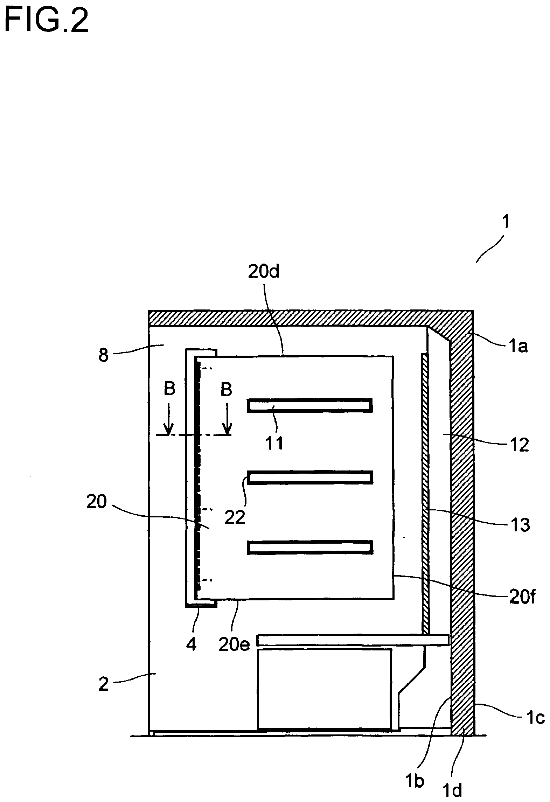

Hereinafter, embodiments of the present invention will be described referring to the accompanying drawings. For ease of description, such parts as find their counterparts in the conventional example shown in the above referred-to FIG. 13 are identified by common reference signs. FIG. 1 is a perspective view showing a refrigerator according to a first embodiment of the present invention, and FIG. 2 is diagram showing part of the refrigerator shown in FIG. 1, as seen in the direction of arrow A. In the refrigerator 1, the storage compartment 2 is sectioned by heat insulating box body 1a having a foamed heat insulating material 1d filled between an inner box 1b and an outer box 1c.

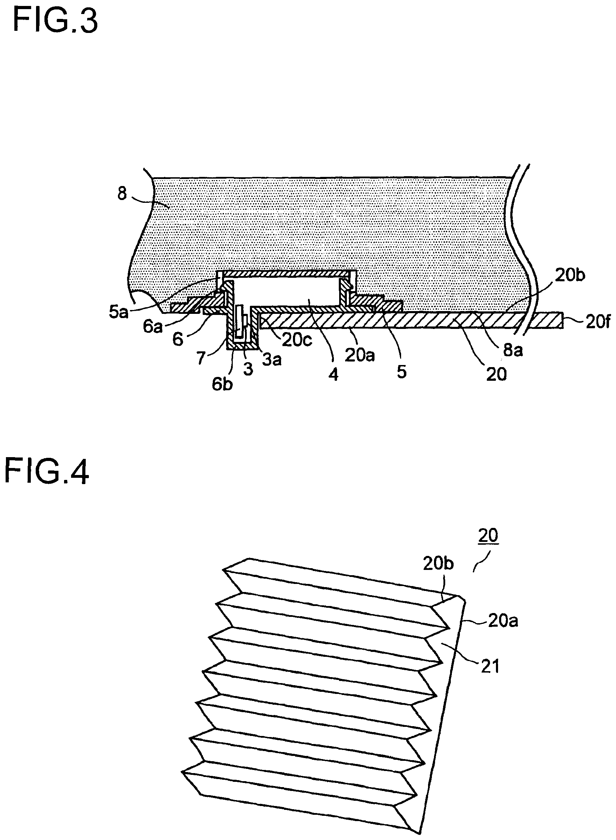

Illumination chambers 4, in each of which an LED 3 (see FIG. 3) is disposed, are formed in right and left side walls 8 of the storage compartment 2 to extend in the up-down direction. A flat plate-shaped light guide plate 20 made of a transparent resin is disposed along each of the right and left side walls 8 in the storage compartment 2. Between the two side walls 8, trays 9 are disposed for placing articles thereon. The trays 9 are each placed between, and supported by, a corresponding pair of supporting portions 11, which are formed on the two side walls 8 to protrude therefrom. The trays 9 can be freely taken in and out of the storage compartment 2. The light guide plate 20 has formed therein openings 22 through which the supporting portions 11 are placed.

A cold air passage 12, where cold air passes, is formed in the rear wall of the storage compartment 2. The cold air passing in the cold air passage 12 is ejected into the storage compartment 2 via an ejection port (not shown). The front side of the cold air passage 12 is covered with a metal panel 13 made of a metal such as aluminum or stainless steel. Cold of the cold air circulating through the cold air passage 12 is discharged via the metal panel 13 into the storage compartment 2. This makes it possible to uniformly cool the inside of the storage compartment 2.

When a door (not shown) of the storage compartment 2 is opened, air containing moisture flows into the storage compartment 2, and the moisture in the air condenses to form dew drops on the metal panel 13. The dews formed on the metal panel 13 are evaporated afterwards, which helps moisturize the storage compartment 2. In addition, if the metal panel 13 is made of stainless steel, metal ions are released into the storage compartment 2 via the dew drops, and the metal ions help sterilize the storage compartment 2.

FIG. 3 is a sectional view taken along line B-B of FIG. 2. FIG. 4 is a perspective view showing the light guide plate 20. The illumination chambers 4 are formed as recesses in the side walls 8 of the storage compartment 2, and the wall surface of each of the illumination chambers 4 is formed of a frame 5 which is a resin molding that is integrally formed with the side walls 8. A lamp cover 6 formed of transparent resin is arranged to cover the front of each of the illumination chamber 4. The lamp cover 6 is fixed by claws 6a that engage in holes 5a formed in the frame 5.

In a front part of the lamp cover 6, there is formed a protrusion 6b that protrudes to the inside of the storage compartment 2, the protrusion 6b being right-angled U-shaped in plan. Inside the protrusion 6b, there is attached a mount board 7 on which a plurality of chip-shaped LEDs 3 are mounted and arranged in an up-down direction. The LEDs 3 are disposed facing a front surface 20c of the light guide plate 8 with light emitting surfaces 3a of the LEDs 3 pointing rearward.

In addition, since the lamp cover 6 is made of transparent resin, part thereof located ahead of the LEDs 3 is made opaque by silk printing. This helps prevent visual recognition of what is inside the illumination chamber 4 such as the mount board 7. Instead of silk printing, a non-glare surface treatment may be applied to the lamp cover 6 by sand blasting, grain finish, or the like. That is, any processing may be applied to the lamp cover 6 as long as it helps effectively make the LEDs 3 less visible.

The light guide plate 20 is made of, for example, a polystyrene resin, and includes a first side surface 20a which faces the inside of the storage compartment 2 and a second side surface 20b which faces the side wall 8, the first and second side surfaces 20a and 20b being located opposite from each other. In addition, a rough-surface portion 21 is formed in the second side surface 20b of the light guide plate 20 to extend in a front-rear direction. The rough-surface portion 21 is saw-edge shaped in vertical section. The shape of the rough-surface portion 21 is, for example, such that the apex angle is 90° and the saw teeth pitch is 0.15 mm. An air layer is formed between the rough-surface portion 21 and the side wall 8. The refraction index of the air layer is approximately 1.0, and that of the light guide plate 20 is 1.59 to 1.60 if it is made of polystyrene, and thus the critical angle of total reflection is approximately 43°.

When the door of the storage compartment 2 is opened, the LEDs 3 are energized, and light emitted from the LEDs passes through the lamp cover 6 to enter the light guide plate 8 via the front surface 20c. The light that enters the light guide plate 20 is reflected on the first and second side surfaces 20a and 20b, to be guided inside the light guide plate 20. And light incident on the first and second side surfaces 20a and 20b with an angle that is smaller than the critical angle is emitted from a surface of the light guide plate 20.

The light emitted from the second side surface 20b is reflected on a reflection surface 8a formed by a surface of the side wall 8 located opposite to the light guide plate 20, and then, the light enters the light guide plate 20 again to be outputted via the first side surface 20a. In this way, the storage compartment 2 is illuminated, from front to rear parts thereof, with light emitted from the entirety of the light guide plate 20. Incidentally, if the reflection surface 8a of the side wall 8 is white, it reflects light toward the storage compartment-2 side more efficiently. Further, it is more desirable to provide either the second side surface 20b of the light guide plate 20 or the reflection surface 8a of the side wall 8 with a reflection member such as a metal reflection film or a reflection sheet, because it would help reduce degradation of light intensity.

Further, light that is guided in the light guide plate 20 is also emitted from upper, lower, and rear surfaces 20d, 20e, and 20f, respectively, of the light guide plate 20. This make it possible to illuminate such parts of the storage compartment 2 that are above, below and behind the light guide plate 20. In addition, light emitted from the rear surface 20f is reflected on the metal panel 13, and thus can illuminate the inside of the storage compartment 2 from the rear surface. If it is designed that no article is to be placed above the light guide plate 20, a reflection member such as a reflection film or a reflection tape may be provided on the upper surface 20d.

According to this embodiment, since the light guide plate 20, which guides light emitted from the LEDs 3 to the rear part of the storage compartment 2, is arranged along each of the two side walls 8 of the storage compartment 2, it is possible to illuminate articles placed in the front and rear parts of the storage compartment 2 from a side direction. It is also possible to illuminate articles placed in front and rear parts of the storage compartment 2 from front and behind. This helps prevent a shadow of an article from being cast over another article placed behind the article to degrade the visibility of the another article, and thus helps improve the visibility of the articles stored in the storage compartment 2.

The light guide plate 20 has the rough-surface portion 21 formed in the second side surface 20b thereof, the rough-surface portion 21 extending in the rear-front direction facing the side wall 8. Compared with a case where the second side surface 20b is formed as a flat surface, light guided by the light guide plate 20 to be reflected by the rough-surface portion 21 is scattered in more directions. As a result, light that reaches a surface of the light guide plate 20 tends to be incident thereon with an angle that is smaller than the critical angle, and thus a reduced amount of light is guided to the rear surface 20f of the light guide plate 20 and an increased amount of light is emitted in a side direction. Thus, the storage compartment 2 can be illuminated more surely thereacross from front to rear thereof to thereby make articles stored therein more visible.

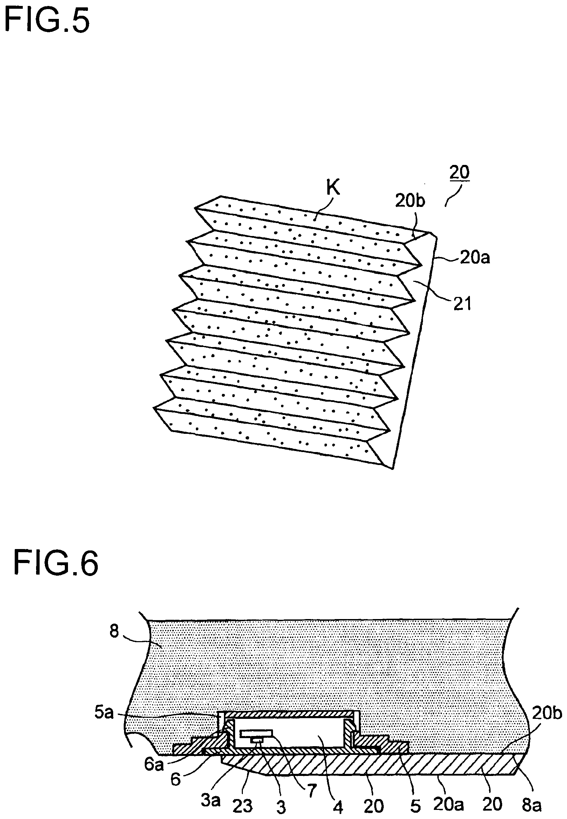

It is more desirable, as shown in FIG. 5, to apply a non-glare surface treatment K to form a pear-skin pattern on the surface of the rough-surface portion 21 by, for example, sand blasting, grain finish, or the like. This makes it possible to further scatter the light that is reflected from the rough-surface portion 21.

Also, since the LEDs 3 are disposed facing the front surface 20c of the light guide plate 20, light emitted from the LEDs 3 is easily led to enter the light guide plate 20.

In addition, part of the lamp cover 6 located ahead of the LEDs 3 is so processed as to make the LEDs 3 less visible. Thereby, the mount board 7 and a conductor, which are disposed inside the illumination chamber 4 are made invisible, which helps improve the appearance of the inside of the storage compartment 2. In addition, it is possible to moderate glare caused by light that is emitted forward from the LEDs 3.

Next, FIG. 6 is a top sectional view showing a front part of a side wall 8 of a storage compartment 2 of a refrigerator 1 according to a second embodiment. For the sake of convenience of description, such parts as find their counterparts in the first embodiment shown in the above referred-to FIGS. 1 to 5 are identified by common reference signs. The second embodiment differs from the first embodiment in location of the LEDs and in shape of the light guide plate 20. In the other respects, the second embodiment is identical to the first embodiment.

A mount board 7 on which LEDs 3 are mounted is disposed in parallel with a light guide plate 20, such that light emitting surfaces 3a of the LEDs 3 face a second side surface 20b of the light guide plate 20. Furthermore, an inclined surface 23 is formed in a front part of the light guide plate 20 such that a rear part of the inclined surface 23 is inclined toward the storage compartment 2 side, and the LEDs 3 are located opposite to the inclined surface 23.

Light emitted from the LEDs 3 passes through a lamp cover 6 and enters the light guide plate 8 through the second side surface 20b. The light that enters the light guide plate 20 is reflected rearward from the inclined surface 23, and is then reflected on the first and second side surfaces 20a and 20b, to be guided in the light guide plate 20. And, light that is incident on the first side surface 20a or the second side surface 20b with an angle smaller than the critical angle is emitted from a surface of the light guide plate 20. A reflection member such as a reflection film or a reflection sheet may be provided on the inclined surface 23.

According to this embodiment, it is possible to obtain the same effects as are obtained according to the first embodiment. In addition, the LEDs 3 are disposed opposite to the inclined surface 23 so as to face the side wall 8 side (the second side surface 20b) of the light guide plate 20. This eliminates the need of forming a protruding portion 6b (see FIG.3) in the lamp cover 6, and as a result, articles can be easily taken out of the storage compartment 2, and this makes the refrigerator 1 more user-friendly.

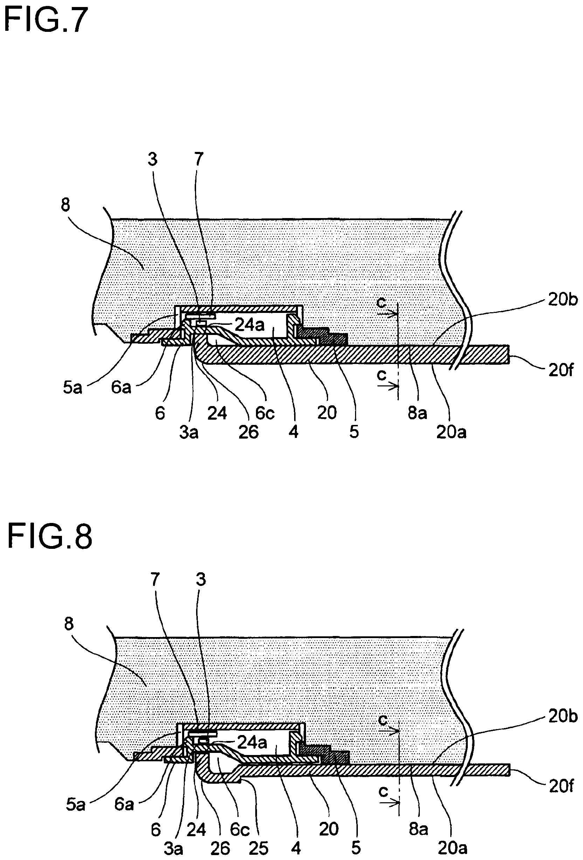

Next, FIG. 7 is a top sectional view showing a front part of a side wall 8 of a storage compartment 2 of a refrigerator 1 according to a third embodiment. For the sake of convenience of description, such parts as find their counterparts in the first embodiment shown in the above referred-to FIGS. 1 to 5 are identified by common reference signs. The third embodiment differs from the first embodiment in location of the LEDs and in shape of the light guide plate 20. In the other respects, the third embodiment is identical to the first embodiment.

On the front surface side of the lamp cover 6, a recess 6c is formed protruding into an illumination chamber 4. Inside the illumination chamber 4, to a side of the recess 6c, a mount board 7, on which a plurality of chip-shaped LEDs 3 are mounted and arranged in an up-down direction, is attached substantially in parallel with the side wall 8.

A bent portion 24, which is bent outward, is formed in a front part of the light guide plate 20. The bent portion 24 which extends in a right-left direction is partly located in the recess 6c of the lamp cover 6, and the light emitting surfaces 3a of the LEDs 3 is located opposite to a vertical end surface 24a of the bent portion via the recess 6c. An end of the bent portion 24 at the storage compartment-2 side is formed as an inclined surface 26 which is formed as a curved surface or a flat surface.

Light emitted from the LEDs 3 passes through the lamp cover 6 to enter the light guide plate 8 through the end surface 24a of the bent portion 24. The light that enters the light guide plate 20 is led rearward by the inclined surface 26 of the bent portion 24, and is reflected by first and second side surfaces 20a, 20b, to be guided in the light guide plate 20. And, light that is incident on the first side surface 20a or the second side surface 20b with an angle smaller than the critical angle is emitted from a surface of the light guide plate 20.

Light that is emitted from the second side surface 20b is reflected on a reflection surface 8a formed by a surface of the side wall 8 located opposite to the light guide plate 20, and the reflected light reenters the light guide plate 20 to be emitted from the first side surface 20a. Light that is guided in the light guide plate 20 is also emitted from an upper surface 20d, a lower surface 20e, and a rear surface 20f of the light guide plate 20. Light that is emitted from the rear surface 20f is reflected on a metal panel 13, and thus can illuminate the inside of the storage compartment 2 from a rear surface thereof.

Incidentally, it is more desirable to color the reflection surface 8a of the side wall 8 white. A reflection member such as a metal reflection film or a metal reflection sheet may be provided on the reflection surface 8a or the second side surface 20b of the light guide plate 20. In addition, a reflection member may be provided on the front surface of the bent portion 24 including the inclined surface 26. If it is designed that no article is to be placed above the light guide plate 20, a reflection member such as a reflection film or a reflection tape may be provided on the upper surface 20d.

According to this embodiment, it is possible to obtain the same effects as are obtained according to the first embodiment. In addition, since the LEDs 3 are disposed opposite to the end surface 24a of the bent portion 24 formed by bending the front part of the light guide plate 20, it is possible to dispose the LEDs 3 such that the light emitting surfaces 3a of the LEDs 3 face the storage compartment 2. Thus, it is possible to dispose the LEDs 3 such that they do not protrude into the storage compartment 2, and this helps make it easier to take out articles from the storage compartment 2 and thus improve the user-friendliness of the refrigerator 1.

Next, FIG. 8 is a top sectional view showing a front part of a side wall 8 of a storage compartment 2 of a refrigerator1 according to a fourth embodiment. For the sake of convenience of description, such parts as find their counterparts in the third embodiment shown in the above referred-to FIG. 7 are identified by common reference signs. According to this embodiment, a stepped portion 25 is formed in a light guide plate 20. In the other respects, the fourth embodiment is identical to the third embodiment.

The stepped portion 25 is formed in a front part of a first side surface 20a of the light guide plate 20. In addition, the stepped portion 25 is formed facing rearward, and disposed behind the bent portion 24. The distance between the right and left light guide plates 20 is set such that the distance is larger in the front part of the storage compartment 2 where the stepped portion 25 is formed in each of the right and left guide plates 20 than in the rear part of the storage compartment 2. As a result, the stepped portions 25 do not block the trays 9 when the trays 9 are taken out of the storage compartment, and thus, collision between the trays 9 and the stepped portions 25 is prevented.

Light emitted from the LEDs 3 passes through the lamp cover 6 to enter the light guide plate 8 through the end surface 24a of the bent portion 24. The light that enters the light guide plate 20 is led rearward by the inclined surface 26 of the bent portion 24, and is reflected by the first and second side surfaces 20a, 20b, to be guided in the light guide plate 20. A reflection member may be provided on the front surface of the bent portion 24 including the inclined surface 26. And, light that is incident on the first side surface 20a or the second side surface 20b with an angle smaller than the critical angle is emitted from a surface of the light guide plate 20.

Light that is emitted from the second side surface 20b is reflected on a reflection surface 8a formed by a surface of the side wall 8 located opposite to the light guide plate 20, and the reflected light reenters the light guide plate 20 to be emitted from the first side surface 20a. The light guided in the light guide plate 20 is also emitted from an upper surface 20d, a lower surface 20e, and a rear surface 20f of the light guide plate 20. In addition, light that is guided inside the light guide plate 20 is emitted rearward from the stepped portion 25. Light that is emitted from the stepped portion 25 and from the rear surface 20f is reflected on a metal panel 13, and thus can illuminate the inside of the storage compartment 2 from a rear surface thereof.

Incidentally, it is more desirable to color the reflection surface 8a of the side wall 8 white. A reflection member such as a metal reflection film or a metal reflection sheet may be provided on the reflection surface 8a of the side wall 8 or the second side surface 20b of the light guide plate 20. Also, a reflection member may be provided on the front surface of the bent portion 24 including the inclined surface 26. If it is designed that no article is to be placed above the light guide plate 20, a reflection member such as a reflection film or a reflection tape may be provided on the upper surface 20d.

According to this embodiment, it is possible to obtain the same effects as are obtained according to the third embodiment. Further, since the metal panel 13 is provided on the rear surface of the storage compartment 2 and the stepped portion 25 facing rearward is formed in the light guide plate 20, articles stored in the storage compartment 2 are illuminated both from front and behind with light emitted rearward from the stepped portion 25 and light reflected by the metal panel 13. This helps prevent a shadow of a front article from being cast over a rear article to degrade the visibility of the rear article, and thus helps improve the visibility of articles stored in the storage compartment 2.

Further, since the stepped portion 25 is formed in the front part of the light guide plate 20, front parts of articles stored in the storage compartment 2 can be illuminated bright no matter where they are placed from front to rear across the storage compartment 2, and this helps further improve the visibility of articles stored in the storage compartment 2.

Also, since the distance between the right and left light guide plates 20 is set such that the distance is larger in the front part of the storage compartment 2 where the stepped portion 25 is formed in each of the right and left light guide plates 20 than in the rear part of the storage compartment 2, the stepped portions 25 do not block the trays 9 when the trays 9 are taken out of the storage compartment 2, and thus, collision between the trays 9 and the stepped portions 25 is prevented. Thus, the trays 9 can be put in and out easily, and this helps improve the user-friendliness of the refrigerator 1.

Also, the front side of a cold air passage 12 is covered with the metal panel 13, and this makes it possible to discharge the cold of cold air from the metal panel 13 to uniformly cool the inside of the storage compartment 2.

Incidentally, the stepped portion 25 may be formed in the light guide plates 20 of the refrigerators 1 of the first and second embodiments.

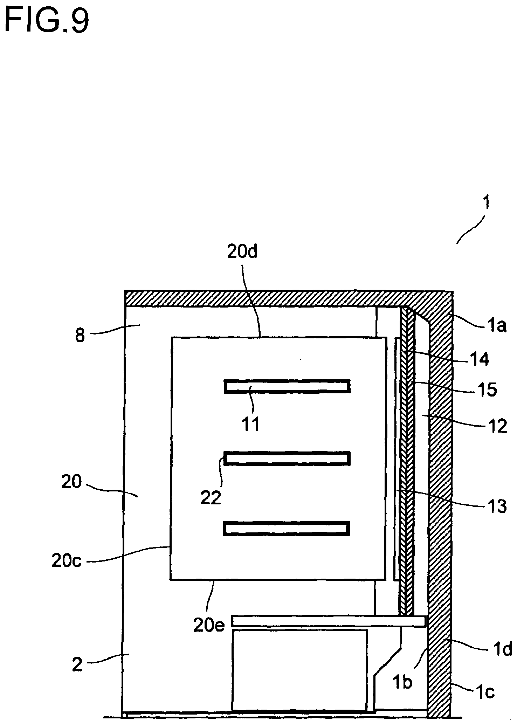

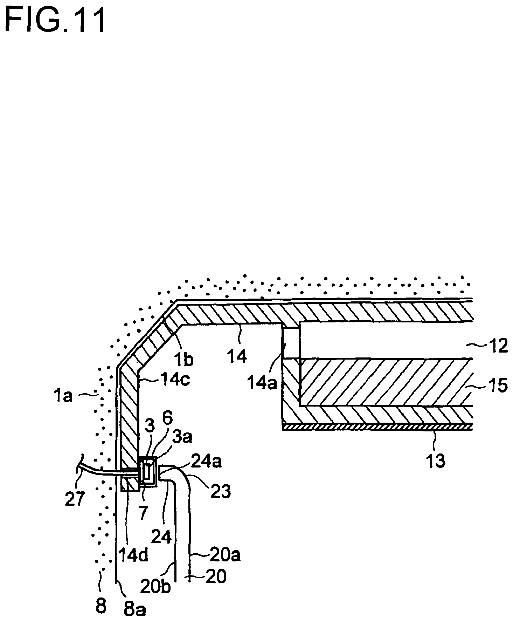

Next, FIG. 9 is a side sectional view showing the inside of a storage compartment 2 of a refrigerator 1 according to a fifth embodiment of the present invention. For the sake of convenience of description, such parts as find their counterparts in the first embodiment shown in the above referred-to FIGS. 1 to 5 are identified by common reference signs, and FIG. 9 is a diagram showing the inside of the storage compartment 2 of the refrigerator 1 as viewed from the same direction as in FIG. 2. In this embodiment, an illumination chamber 4 (see FIG. 2) to be formed as a recess in a front part of a side wall 8 of the storage compartment 2 is omitted, and LEDs 3 (see FIG. 11) are disposed in a rear part of the storage compartment 2. In the other respects, the fifth embodiment is identical to the first embodiment.

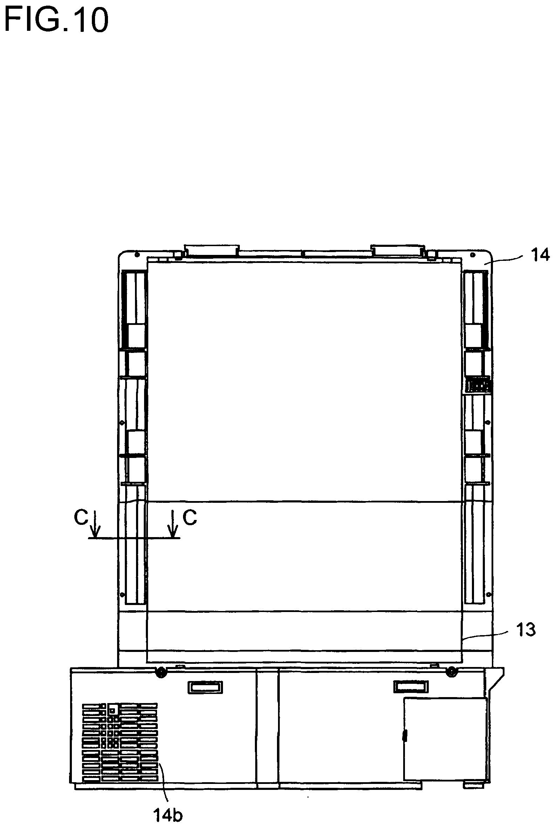

A duct panel 14 is arranged in a rear surface of the storage compartment 2. FIG. 10 is a front view showing the duct panel 14, and FIG. 11 is a sectional view taken along line C-C of FIG. 10 and showing the inside of the storage compartment 2. The duct panel 14 is a resin molding, and forms a cold air passage 12 extending in an up-down direction at the center of the rear surface of the storage compartment 2. A heat insulating material 15 is arranged at a front surface of the cold air passage 12 in the duct panel 14, and a front surface of the duct panel 14 is covered with the metal panel 13. Cold of cold air passing in the cold air passage 12 is transmitted to the metal panel 13. As this time, the heat insulating material 15 prevents dew concentration on the metal panel 13 from occurring due to overcooling of the metal panel 13.

An outlet port 14a through which cold air is discharged in a side direction from the cold air passage 12 is formed in the duct panel 14. In a lower part of the duct panel 14, a return port 14b through which cold air flows out is formed. Cold air that passes in the cold air passage 12 is discharged into the storage compartment 2 via the outlet port 14a, cools down the storage compartment 2, and then flows out of the storage compartment 2 via the return port 14b.

The duct panel 14 extends to a side wall 8 of the storage compartment 2, and there is formed an extension portion 14c that is bent forward along the side wall 8. A mount board 7 on which a plurality of chip-shaped LEDs 3 are mounted and arranged in the up-down direction is attached to the extension portion 14c substantially in parallel with the side wall 8. Thus, the LEDs 3 are disposed in a rear part of the storage compartment 2 such that light emitting surfaces 3a of the LEDs 3 are set substantially in parallel with the side wall 8. In addition, the LEDs 3 are set in the vicinity of trays 9 (see FIG. 1), and covered with a transparent lamp cover 6 that is attached to the duct cover 14.

In the extension portion 14c, in the vicinity of the mount board 7, there is formed a hole 14d through which a conductor 27 is placed. The conductor 27 extends from an electric portion (not shown) arranged behind the refrigerator 1, and is connected to the LEDs 3 via the mount board 7. Since the LEDs 3 are arranged in the rear part of the storage compartment 2, the conductor 27 can be short. This makes it possible to reduce occurrence of voids due to the conductor 27 in a foamed heat insulating material 1d of a heat insulating box body 1a.

A light guide plate 20, which is arranged along the side wall 8, is made of polystyrene resin, and a first side surface 20a which faces the inside of the storage compartment 2 and a second side surface 20b which faces the side wall 8 are arranged opposite from each other. A bent portion 24 which is bent outward is formed in a rear part of the light guide plate 20. The light emitting surfaces 3a of the LEDs 3 face a vertical end surface 24a of the bent portion 24. A storage compartment 2-side end portion of the bent portion 24 is formed at an inclined surface 23 which is formed as a curved surface or as a flat surface.

In the refrigerator 1 structured as described above, when a door of the storage compartment 2 is opened, the LEDs 3 are energized. Light emitted from the LEDs 3 passes through the lamp cover 6 to enter the light guide plate 8 through the end surface 24a of the bent portion 24. Light that enters the light guide plate 20 is guided forward by the inclined surface 23 of the bent portion 24, and the light is reflected by the first and second side surfaces 20a and 20b, to be guided in the light guide plate 20. And, light that is incident on the first side surface 20a or the second side surface 20b with an angle smaller than the critical angle is emitted from a surface of the light guide plate 20.

Light that is emitted from the second side surface 20b is reflected on a reflection surface 8a formed by an inner box 1b located opposite to the light guide plate 20, and the reflected light reenters the light guide plate 20 to be emitted from the first side surface 20a. In this way, the storage compartment 2, from front to rear parts thereof, is illuminated with light emitted from the entirety of the light guide plate 20. Incidentally, if the reflection surface 8a of the side wall 8 is colored white, it is easier for the reflection surface 8a to reflect light to the storage compartment-2 side. Also, it is more desirable to provide a reflection member such as a metal reflection film or a metal reflection sheet on the reflection surface 8a of the side wall 8 or the second side surface 20b of the light guide plate 20, because it will help reduce degradation of light intensity. Further, a reflection member may be provided on a rear surface of the bent portion 24 including the inclined surface 23.

Light that is guided in the light guide plate 20 is also emitted from a front surface 20c, an upper surface 20d and a lower surface 20e of the light guide plate 20. This makes it possible to illuminate such portions of the storage compartment 2 that are in front of, above, and below the light guide plate 20. If it is designed that no article is to be put in front of or above the light guide plate 20, a reflection member such as a reflection film or a reflection tape may be provided on the front surface 20c or the upper surface 20d.

Part of light that is emitted from the LEDs 3 is reflected on the metal panel 13, and this makes it possible to illuminate the inside of the storage compartment 2 from the rear surface. In addition, the LEDs 3 are arranged in the vicinity of the trays 9, and thus part of light emitted from the LEDs 3 enters the trays 9 to be guided therein. Light guided in the trays 9 to be incident on a surface of the trays 9 with an angle smaller than the critical angle is emitted from the surface of the trays 9. In this way, it is possible to illuminate an article from both above and below as well.

According to this embodiment, like in the first embodiment, since the light guide plate 20, which guides light emitted from the LEDs 3 to the front part of the storage compartment 2, is arranged along each of the two side walls 8 of the storage compartment, it is possible to illuminate articles placed in the front and rear parts of the storage compartment 2 from a side direction. It is also possible to illuminate the articles placed in the front and rear parts of the storage compartment 2 from ahead and behind the articles. This helps prevent a shadow of an article from being cast over another article placed behind the article to degrade the visibility of the another article, and thereby the visibility of the articles stored in the storage compartment 2 is improved.

Also, since the LEDs 3 are arranged in the rear part of the storage compartment 2, the conductor 27, which is connected to the LEDs 3, can be short. This makes it possible to reduce occurrence of voids due to the conductor 27 in the foamed heat insulating material of the heat insulating box body 1a. This contributes to reduction of the cost of, and improvement of heat insulating capacity of, the refrigerator 1.

In addition, since the LEDs 3 are attached to the duct panel 14 that covers the rear surface of the storage compartment 2 and forms the cold air passage 12, it is easy to dispose the LEDs 3 in predetermined positions by setting the duct panel 14. This facilitates fabrication of the refrigerator 1.

Further, since the LEDs 3 are disposed opposite to the end surface 24a of the bent portion 24 formed by bending the rear part of the light guide plate 20, it is possible to dispose the light emitting surfaces 3a of the LEDs 3 substantially in parallel with the side wall 8 of the storage compartment 2, which makes it easy to set the mount board 7.

Further, since the metal panel 13 is provided on the rear surface of the storage compartment 2, it is possible to reflect part of light emitted from the LEDs 3 to illuminate therewith the inside of the storage compartment 2 from the rear surface. This helps improve the visibility of the articles stored in the storage compartment 2.

Further, since the LEDs 3 are disposed in the vicinity of the trays 9, part of light emitted from the LEDs 3 is guided in the trays 9, and this makes it possible to illuminate the articles stored in the storage compartment 2 from above and below. This helps improve the visibility of the articles stored in the storage compartment 2. Incidentally, in the refrigerators 1 of the first to fourth embodiments as well, the LEDs 3 are preferably disposed in the vicinity of the trays 9.

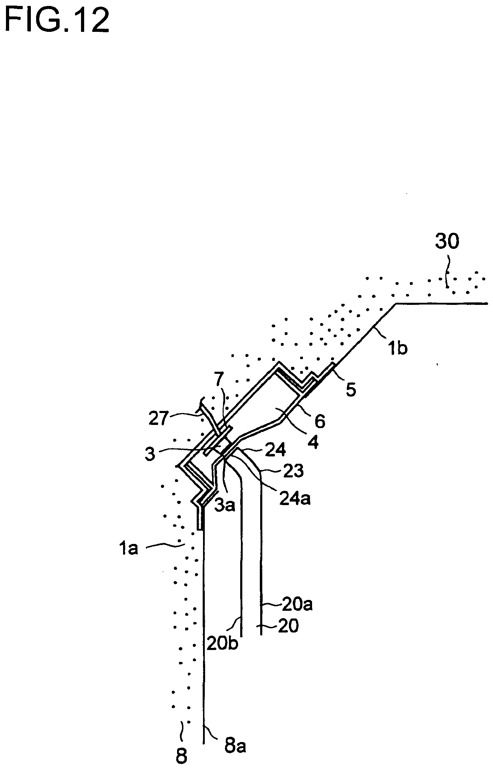

Next, FIG. 12 is a top sectional view showing a side wall of a storage compartment 2 of a refrigerator 1 according to a sixth embodiment. For ease of description, such parts as find their counterparts in the fifth embodiment shown in the above referred-to FIGS. 9 to 11 are identified by common reference signs. The sixth embodiment differs from the fifth embodiment in how LEDs 3 are disposed. In the other respects, the sixth embodiment is identical to the fifth embodiment.

In a corner portion between a side wall 8 and a rear wall 30 of the storage compartment 2, an illumination chamber 4 is formed as a recess for setting the LEDs 3 therein. A wall surface of the illumination chamber 4 is formed by a frame 5 which is a resin molding integrally formed with the side wall 8. A lamp cover 6 formed of transparent resin is arranged to cover the front of the illumination chamber 4. The lamp cover 6 is held between the frame 5 and an inner box 1b of a heat insulating box body 1a.

Inside the illumination chamber 4, a mount board 7 on which a plurality of chip-shaped LEDs 3 are mounted and arranged in an up-down direction is attached substantially in parallel with a surface of the inner box 1b. The LEDs 3 are arranged in the vicinity of the trays 9. An end surface 24a of a bent portion 24 of a light guide plate 20 is disposed opposite to light emitting surfaces 3a of the LEDs 3.

In the refrigerator 1 configured as described above, like in the fifth embodiment, when the LEDs 3 are energized, light emitted from the LEDs 3 passes through the lamp cover 6 to enter a light guide plate 8 through the end surface 24 of the bent portion 24. Light that enters the light guide plate 20 is guided forward by an inclined surface 23 of the bent portion 24, and the light is reflected by first and second side surfaces 20a, 20b, to be guided in the light guide plate 20. And, light that is incident on the first side surface 20a or the second side surface 20b with an angle smaller than the critical angle is emitted from a surface of the light guide plate 20.

According to this embodiment, it is possible to obtain the same effects as are obtained according to the fifth embodiment. Also, since the illumination chamber 4 in which the LEDs 3 are disposed are formed as a recess in the corner portion between the side wall 8 and the rear wall 30 of the storage compartment 2, it is possible to illuminate the inside of the storage compartment 2 without the LEDs 3 protruding into the storage compartment 2 as in the first embodiment. This helps improve the volume efficiency of the storage compartment 2.

In the first to sixth embodiments, the light guide plate 20 may be made of acrylic resin or glass as long as it is transparent. However, polystyrene resin has better moldability and disperses light more widely than acrylic resin or glass. Thus, polystyrene resin makes it possible to easily form the light guide plate 20 and to reduce the amount of light that is guided to a rear surface 20f while increasing light that is emitted from the first side surface 20a and the second side surface 20b. Thus, it is possible to further improve the visibility of articles stored in the storage compartment 2.

Further, a coloring material may be mixed in the light guide plate 20 to give color to the illumination light. In this way, since light takes on color at a location away from the LEDs 3, it is possible to reduce the amount of coloring material in comparison with a case of coloring the lamp cover 6 which is located close to the LEDs 3. This makes it possible to color the light while preventing degradation of brightness. It is also possible to change the color of the illumination light by replacing the light guide plate 20 as a user desires.

In the lamp cover 6, there may be formed a hole through which the LEDs 3 are placed. This makes it possible for the light emitted from the LEDs 3 to directly enter the light guide plate 20, and thus to enhance the intensity of light. Here, by forming the lamp cover 6 as a non-transparent lamp cover, it is possible to make the mount board 7 and the conductor inside the illumination chamber 4 invisible, to thereby improve the appearance of the inside of the storage compartment 2. It is also possible to moderate glare that is caused by light that is emitted forward from the LEDs 3.

### Industrial Applicability

The present invention is applicable to a refrigerator in which a storage compartment is illuminated by using an LED.

### List of Reference Symbols

- 1: refrigerator
- 2: storage compartment
- 3: LED
- 4: illumination chamber
- 5: frame
- 6: lamp cover
- 7: mount board
- 8: side wall
- 11: support member
- 12: cold air passage
- 13: metal panel
- 14: duct panel
- 14a: outlet port
- 14b: return port
- 14c: extension portion
- 20: light guide plate
- 20a: first side surface
- 20b: second side surface
- 20c: front surface
- 21: rough-surface portion
- 22: opening
- 23, 26: inclined surface
- 24: bent portion
- 25: stepped portion
- 27: conductor

## Claims

1. A refrigerator (1) having
a storage compartment (2) in which an article is stored, an illumination chamber (4) formed as a recess in a front part of each side wall (8) of the storage compartment (2); and
a plurality of LEDs (3) that are arranged in an up-down direction in each illumination chamber (4); wherein
a light guide plate (20) is respectively arranged along each side wall (8) such that each light guide plate (20) at least partially covers a respective illumination chamber (4) and a respective side wall (8) behind the illumination chamber (4),
wherein said each light guide plate (20) includes a first side surface (20a), which faces the inside of the storage compartment, and a second side surface (20b), which faces the respective side wall (8),
**characterized in that** said first and second side surfaces (20a, 20b) are configured to reflect light that enters the light guide plate (20) from the LEDs (3) toward a rear part of the storage compartment (2) such that an inside of the storage compartment (2) is illuminated with light that is guided in the light guide plate (20) and emitted from the entirety of the light guide plate (20);
the refrigerator further comprising lamp covers (6) that cover the LEDs (3) are provided between the LEDs (3) and the light guide plate (20), said lamp covers (6) being adapted to allow light emitted from the LEDs to pass through the respective lamp cover (6) to enter the respective light guide plate (20), the lamp covers (6) have an opaque or non-glare part thereof located ahead of the respective plurality of LEDs (3) so processed as to reduce visibility of the LEDs (3).

2. The refrigerator (1) according to claim 1, wherein the LEDs (3) are disposed facing the front surfaces (20a) of the light guide plates (20).

3. The refrigerator (1) according to claim 1,
wherein
each light guide plate (20) has an inclined surface (23) that is formed in a front part of the light guide plate (20) at a storage-compartment side, a rear part of the inclined surface (20) being inclined toward the storage compartment (2) side; and
the LEDs (3) are disposed facing a side-wall side of the light guide plate (20) and opposite to the inclined surface (23, 26).

4. The refrigerator (1) according to claim 1,
wherein
each light guide plate (20) has a bent portion (24) formed by bending a front part of the light guide plate (20) toward an outer side of the storage compartment (2), with the respective plurality of LEDs (3) being disposed opposite to an end surface of the bent portion (24).

5. The refrigerator (1) according to claim 1, further comprising:
a metal panel that covers a rear surface of the storage compartment (2),
wherein
stepped portions (25) that face the rear part of the storage compartment (2) is formed in the light guide plates (20) at a storage-compartment side (2) of the light guide plates (20).

6. The refrigerator (1) according to claim 5, wherein the stepped portions (25) is formed in a front parts of the light guide plates (20).

7. The refrigerator (1) according to claim 6,
wherein
the illumination chamber (4), the light guide plate (20), and the plurality of LEDs (3) are disposed at each of both side walls;
a removable tray on which an article is placed is provided inside the storage compartment (2); and
a distance between the light guide plate (20) on a right-side one of the side walls and the light guide plate (20) on a left-side one of the side walls is larger at a front part of the storage compartment (2) than at the rear part of the storage compartment (2).

8. The refrigerator (1) according to claim 7, further comprising:
a cold air passage (12) through which cold air for cooling the storage compartment (2) passes, a front side of the cold air passage (12) being covered with the metal panel.

9. A refrigerator (1) having a storage compartment (2) in which an article is stored, an illumination chamber (4) formed as a recess in each side wall (8) of the storage compartment (2); and
a plurality of LEDs (3) that are arranged in an up-down direction in each illumination chamber (4); wherein
a light guide plate (20) is respectively arranged along each side wall (8) such that each light guide plate (20) at least partially covers a respective illumination chamber (4) and a respective side wall (8) ahead of the illumination chamber (4),
wherein said each light guide plate (20) includes a first side surface (20a), which faces the inside of the storage compartment, and a second side surface (20b), which faces the respective side wall (8),
**characterized in that** said each illumination chamber is formed as a recess in a rear part of each side wall of the storage compartment,
wherein said first and second side surfaces (20a, 20b) are configured to reflect light that enters the light guide plate (20) from the LEDs (3) toward a front part of the storage compartment (2) such that an inside of the storage compartment (2) is illuminated with light that is guided in the light guide plate (20) and emitted from the entirety of the light guide plate (20),
the refrigerator further comprising lamp covers (6) that cover the LEDs (3) are provided between the LEDs (3) and the light guide plate (20), said lamp covers (6) being adapted to allow light emitted from the LEDs to pass through the respective lamp cover (6) to enter the respective light guide plate (20) the lamp covers (6) have an opaque or non-glare part thereof located ahead of the respective plurality of LEDs (3) so processed as to reduce visibility of the LEDs (3).

10. The refrigerator (1) according to claim 9,
wherein
the rear part of the each side wall (8) of the storage compartment (2) has an inclined portion of which a rear part is inclined toward the storage compartment (2) side, and the rear end of the inclined portion is connected to a side end of a rear surface of the storage compartment (2); and
the illumination chamber (4) is disposed in the inclined portion.

11. The refrigerator (1) according to claim 9,
wherein
the light guide plates (20) have, at a rear part thereof, bent portions (24) which are bent toward outer sides of the storage compartment (2); and
the LEDs (3) are disposed opposite to end surface of the bent portions (24).

12. The refrigerator (1) according to claim 9, wherein a metal panel is provided at a rear surface of the storage compartment (2).

13. The refrigerator (2) according to claim 1 or 9, further comprising:
a plurality of transparent trays that are arranged inside the storage compartment (2) and on which a storage article is placed,
wherein
the LEDs (3) are disposed in vicinity of the trays.

14. The refrigerator (1) according to any one of claims 1 to 12,
wherein
the light guide plates (20) have a rough-surface portion (21) that faces the side wall and extends in a rear-front direction.

15. The refrigerator (1) according any one of claims 1 to 12, wherein the light guide plates (20) are made of polystyrene resin.

16. The refrigerator (1) according to any one of claims 1 to 12, wherein a reflection surface is formed with such part of a surface of each side wall of the storage compartment (2) as faces the respective light guide plates (20).

## Patentansprüche

1. Kühlschrank (1), der Folgendes aufweist:
ein Aufbewahrungsfach (2), in dem ein Artikel aufbewahrt wird,
eine Beleuchtungskammer (4), die als Aussparung in einem vorderen Teil jeder Seitenwand (8) des Aufbewahrungsfachs (2) gebildet ist; und
eine Vielzahl von LEDs (3), die in einer Aufwärts-Abwärts-Richtung in jeder Beleuchtungskammer (4) angeordnet sind; wobei
jeweils eine Lichtleitplatte (20) entlang jeder Seitenwand (8) angeordnet ist, sodass jede Lichtleitplatte (20) eine jeweilige Beleuchtungskammer (4) und eine jeweilige Seitenwand (8) hinter der Beleuchtungskammer (4) mindestens teilweise abdeckt,
wobei jede Lichtleitplatte (20) eine Oberfläche (20a) der ersten Seite, die dem Inneren des Aufbewahrungsfachs zugewandt ist, und eine Oberfläche (20b) der zweiten Seite, die der jeweiligen Seitenwand (8) zugewandt ist, umfasst,
**dadurch gekennzeichnet, dass** die Oberflächen der ersten und der zweiten Seite (20a, 20b) dazu konfiguriert sind, von den LEDs (3) her in die Lichtleitplatte (20) eindringendes Licht in Richtung eines hinteren Teils des Aufbewahrungsfachs (2) zu reflektieren, sodass ein Inneres des Aufbewahrungsfachs (2) mit Licht beleuchtet wird, das in der Lichtleitplatte (20) geleitet und vom Ganzen der Lichtleitplatte (20) ausgestrahlt wird;
wobei der Kühlschrank weiter Lampenabdeckungen (6) umfasst, die die LEDs (3) abdecken und zwischen den LEDs (3) und der Lichtleitplatte (20) vorgesehen sind, wobei die Lampenabdeckungen (6) dazu angepasst sind, von den LEDs ausgestrahltes Licht durch die jeweilige Lampenabdeckung (6) gelangen zu lassen, um in die jeweilige Lichtleitplatte (20) einzudringen, wobei die Lampenabdeckungen (6) einen opaken oder blendfreien Teil derselben aufweisen, der vor der jeweiligen Vielzahl von LEDs (3) liegt und der derart verarbeitet ist, dass er die Sichtbarkeit der LEDs (3) verringert.

2. Kühlschrank (1) nach Anspruch 1, wobei die LEDs (3) den vorderen Oberflächen (20a) der Lichtleitplatten (20) zugewandt angeordnet sind.

3. Kühlschrank (1) nach Anspruch 1, wobei
jede Lichtleitplatte (20) eine geneigte Oberfläche (23) aufweist, die in einem vorderen Teil der Lichtleitplatte (20) auf einer Aufbewahrungsfachseite gebildet ist, wobei ein hinterer Teil der schrägen Oberfläche (20) zur Seite des Aufbewahrungsfachs (2) hin geneigt ist; und
die LEDs (3) einer Seitenwandseite der Lichtleitplatte (20) zugewandt und der geneigten Oberfläche (23, 26) gegenüberliegend angeordnet sind.

4. Kühlschrank (1) nach Anspruch 1, wobei
jede Lichtleitplatte (20) einen gebogenen Abschnitt (24) aufweist, der durch Biegen eines vorderen Teils der Lichtleitplatte (20) zu einer Außenseite des Aufbewahrungsfachs (2) hin gebildet ist, wobei die jeweilige Vielzahl von LEDs (3) einer Stirnfläche des gebogenen Abschnitts (24) gegenüberliegend angeordnet ist.

5. Kühlschrank (1) nach Anspruch 1, der weiter Folgendes umfasst:
eine Metallplatte, die eine hintere Oberfläche des Aufbewahrungsfachs (2) bedeckt, wobei
abgestufte Abschnitte (25), die dem hinteren Teil des Aufbewahrungsfachs (2) zugewandt sind, in den Lichtleitplatten (20) auf einer Aufbewahrungsfachseite (2) der Lichtleitplatten (20) gebildet sind.

6. Kühlschrank (1) nach Anspruch 5, wobei die abgestuften Abschnitte (25) in einem vorderen Teil der Lichtleitplatten (20) gebildet sind.

7. Kühlschrank (1) nach Anspruch 6, wobei
die Beleuchtungskammer (4), die Lichtleitplatte (20) und die Vielzahl von LEDs (3) an jeder von beiden Seitenwänden angeordnet sind;
eine herausnehmbare Ablage, auf die ein Artikel platziert wird, in dem Aufbewahrungsfach (2) vorgesehen ist; und
ein Abstand zwischen der Lichtleitplatte (20) an einer rechten der Seitenwände und der Lichtleitplatte (20) an einer linken der Seitenwände an einem vorderen Teil des Aufbewahrungsfachs (2) größer ist als an dem hinteren Teil des Aufbewahrungsfachs (2).

8. Kühlschrank (1) nach Anspruch 7, der weiter Folgendes umfasst:
einen Kaltluftdurchgang (12), durch den kalte Luft zum Kühlen des Aufbewahrungsfachs (2) gelangt, wobei eine Vorderseite des Kaltluftdurchgangs (12) von der Metallplatte abgedeckt ist.

9. Kühlschrank (1), der Folgendes aufweist:
ein Aufbewahrungsfach (2), in dem ein Artikel aufbewahrt wird,
eine Beleuchtungskammer (4), die als Aussparung in jeder Seitenwand (8) des Aufbewahrungsfachs (2) gebildet ist; und
eine Vielzahl von LEDs (3), die in einer Aufwärts-Abwärts-Richtung in jeder Beleuchtungskammer (4) angeordnet sind; wobei
jeweils eine Lichtleitplatte (20) entlang jeder Seitenwand (8) angeordnet ist, sodass jede Lichtleitplatte (20) eine jeweilige Beleuchtungskammer (4) und eine jeweilige Seitenwand (8) vor der Beleuchtungskammer (4) mindestens teilweise abdeckt,
wobei jede Lichtleitplatte (20) eine Oberfläche (20a) der ersten Seite, die dem Inneren des Aufbewahrungsfachs zugewandt ist, und eine Oberfläche (20b) der zweiten Seite, die der jeweiligen Seitenwand (8) zugewandt ist, umfasst,
**dadurch gekennzeichnet, dass** jede Beleuchtungskammer als Aussparung in einem hinteren Teil jeder Seitenwand des Aufbewahrungsfachs gebildet ist,
wobei die Oberflächen (20a, 20b) der ersten und der zweiten Seite dazu konfiguriert sind, von den LEDs (3) her in die Lichtleitplatte (20) eindringendes Licht in Richtung eines vorderen Teils des Aufbewahrungsfachs (2) zu reflektieren, sodass ein Inneres des Aufbewahrungsfachs (2) mit Licht beleuchtet wird, das in der Lichtleitplatte (20) geleitet und vom Ganzen der Lichtleitplatte (20) ausgestrahlt wird,
wobei der Kühlschrank weiter Lampenabdeckungen (6) umfasst, die die LEDs (3) abdecken und zwischen den LEDs (3) und der Lichtleitplatte (20) vorgesehen sind, wobei die Lampenabdeckungen (6) dazu angepasst sind, von den LEDs ausgestrahltes Licht durch die jeweilige Lampenabdeckung (6) gelangen zu lassen, um in die jeweilige Lichtleitplatte (20) einzudringen, wobei die Lampenabdeckungen (6) einen opaken oder blendfreien Teil derselben aufweisen, der vor der jeweiligen Vielzahl von LEDs (3) liegt und der derart verarbeitet ist, dass er die Sichtbarkeit der LEDs (3) verringert.

10. Kühlschrank (1) nach Anspruch 9, wobei
der hintere Teil jeder Seitenwand (8) des Aufbewahrungsfachs (2) einen geneigten Abschnitt aufweist, von dem ein hinterer Teil zur Seite des Aufbewahrungsfachs (2) hin geneigt ist, und das hintere Ende des geneigten Abschnitts mit einem seitlichen Ende einer hinteren Oberfläche des Aufbewahrungsfachs (2) verbunden ist; und die Beleuchtungskammer (4) in dem geneigten Abschnitt angeordnet ist.

11. Kühlschrank (1) nach Anspruch 9, wobei
die Lichtleitplatten (20) an einem hinteren Teil derselben gebogene Abschnitte (24) aufweisen, die zu äußeren Seiten des Aufbewahrungsfachs (2) hin gebogen sind; und
die LEDs (3) der Stirnfläche der gebogenen Abschnitte (24) gegenüberliegend angeordnet sind.

12. Kühlschrank (1) nach Anspruch 9, wobei eine Metallplatte an einer hinteren Oberfläche des Aufbewahrungsfachs (2) vorgesehen ist.

13. Kühlschrank (2) nach Anspruch 1 oder 9, der weiter Folgendes umfasst:
eine Vielzahl von durchsichtigen Ablagen, die in dem Aufbewahrungsfach (2) angeordnet sind, und auf die ein Aufbewahrungsartikel platziert wird, wobei
die LEDs (3) in der Nähe der Ablagen angeordnet sind.

14. Kühlschrank (1) nach einem der Ansprüche 1 bis 12, wobei die Lichtleitplatten (20) einen Abschnitt (21) mit rauer Oberfläche aufweisen, der der Seitenwand zugewandt ist und sich in einer Richtung von hinten nach vorne erstreckt.

15. Kühlschrank (1) nach einem der Ansprüche 1 bis 12, wobei die Lichtleitplatten (20) aus Polystyrolharz hergestellt sind.

16. Kühlschrank (1) nach einem der Ansprüche 1 bis 12, wobei eine Reflexionsoberfläche mit demjenigen Teil einer Oberfläche jeder Seitenwand des Aufbewahrungsfachs (2) gebildet ist, der den jeweiligen Lichtleitplatten (20) zugewandt ist.

## Revendications

1. Réfrigérateur (1) comportant
un compartiment de stockage (2) dans lequel un article est stocké,
une chambre d'éclairage (4) formée en tant que renfoncement dans une partie avant de chaque paroi latérale (8) du compartiment de stockage (2) ; et
une pluralité de DEL (3) agencées de haut en bas dans chaque chambre d'éclairage (4) ; dans lequel
une plaque de guidage de lumière (20) est agencée respectivement le long de chaque paroi latérale (8) de telle sorte que chaque plaque de guidage de lumière (20) couvre au moins partiellement une chambre d'éclairage respective (4) et une paroi latérale respective (8) derrière la chambre d'éclairage (4),
dans lequel chaque dite plaque de guidage de lumière (20) comporte une première surface latérale (20a), laquelle fait face à l'intérieur du compartiment de stockage, et une seconde surface latérale (20b), laquelle fait face à la paroi latérale respective (8), **caractérisé en ce que** lesdites première et seconde surfaces latérales (20a, 20b) sont configurées pour refléter la lumière qui entre dans la plaque de guidage de lumière (20) depuis les DEL (3) vers une partie arrière du compartiment de stockage (2) de telle sorte qu'un intérieur du compartiment de stockage (2) soit éclairé par la lumière qui est guidée dans la plaque de guidage de lumière (20) et émise depuis la totalité de la plaque de guidage de lumière (20) ;
le réfrigérateur comprenant en outre des cache-lampes (6) qui recouvrent les DEL (3) et sont fournis entre les DEL (3) et la plaque de guidage de lumière (20), lesdits cache-lampes (6) étant adaptés pour permettre à la lumière émise par les DEL de passer à travers le cache-lampe respectif (6) pour entrer dans la plaque de guidage de lumière respective (20), les cache-lampes (6) comportent une partie opaque ou anti-éblouissement située devant la pluralité respective de DEL (3) ainsi traitée pour réduire la visibilité des DEL (3).

2. Réfrigérateur (1) selon la revendication 1, dans lequel les DEL (3) sont disposés en face des surfaces avant (20a) des plaques de guidage de lumière (20).

3. Réfrigérateur (1) selon la revendication 1,
dans lequel
chaque plaque de guidage de lumière (20) comporte une surface inclinée (23) formée dans une partie avant de la plaque de guidage de lumière (20) au niveau d'un côté compartiment de stockage, une partie arrière de la surface inclinée (20) étant inclinée vers le côté du compartiment de stockage (2) ; et
les DEL (3) sont disposées en face d'un côté de paroi latérale de la plaque de guidage de lumière (20) et opposées à la surface inclinée (23, 26).

4. Réfrigérateur (1) selon la revendication 1,
dans lequel
chaque plaque de guidage de lumière (20) comporte une section coudée (24) formée en coudant une partie avant de la plaque de guidage de lumière (20) vers un côté extérieur du compartiment de stockage (2), la pluralité respective de DEL (3) étant disposée opposée à une surface d'extrémité de la section coudée (24).

5. Réfrigérateur (1) selon la revendication 1, comprenant en outre :
un panneau métallique qui couvre une surface arrière du compartiment de stockage (2),
dans lequel
des parties échelonnées (25) qui font face à la partie arrière du compartiment de stockage (2) sont formées dans les plaques de guidage de lumière (20) au niveau d'un côté compartiment de stockage (2) des plaques de guidage de lumière (20).

6. Réfrigérateur (1) selon la revendication 5, dans lequel les parties échelonnées (25) sont formées dans une partie avant des plaques de guidage de lumière (20).

7. Réfrigérateur (1) selon la revendication 6,
dans lequel
la chambre d'éclairage (4), la plaque de guidage de lumière (20), et la pluralité de DEL (3) sont disposées au niveau de chacune des deux parois latérales ;
un plateau amovible sur lequel un article est placé est fourni à l'intérieur du compartiment de stockage (2) ; et
une distance entre la plaque de guidage de lumière (20) sur une paroi droite des parois latérales et la plaque de guidage de lumière (20) sur une paroi gauche des parois latérales est plus importante au niveau d'une partie avant du compartiment de stockage (2) qu'au niveau d'une partie arrière du compartiment de stockage (2).

8. Réfrigérateur (1) selon la revendication 7, comprenant en outre :
un passage d'air froid (12) au travers duquel passe de l'air froid pour refroidir le compartiment de stockage (2), un côté avant du passage d'air froid (12) étant couvert par le panneau métallique.

9. Réfrigérateur (1) comportant un compartiment de stockage (2) dans lequel un article est stocké,
une chambre d'éclairage (4) formée en tant que renfoncement dans chaque paroi latérale (8) du compartiment de stockage (2) ; et
une pluralité de DEL (3) agencées de haut en bas dans chaque chambre d'éclairage (4) ; dans lequel
une plaque de guidage de lumière (20) est agencée respectivement le long de chaque paroi latérale (8) de telle sorte que chaque plaque de guidage de lumière (20) couvre au moins partiellement une chambre d'éclairage respective (4) et une paroi latérale respective (8) devant la chambre d'éclairage (4),
dans lequel chaque dite plaque de guidage de lumière (20) comporte une première surface latérale (20a), qui fait face à l'intérieur du compartiment de stockage, et une seconde surface latérale (20b), qui fait face à la paroi latérale respective (8), **caractérisé en ce que** chaque dite chambre d'éclairage est formée en tant que renfoncement dans une partie arrière de chaque paroi latérale du compartiment de stockage,
dans lequel lesdites première et seconde surfaces latérales (20a, 20b) sont configurées pour refléter la lumière qui entre dans la plaque de guidage de lumière (20) depuis les DEL (3) vers une partie avant du compartiment de stockage (2) de telle sorte qu'un intérieur du compartiment de stockage (2) soit éclairé par la lumière qui est guidée dans la plaque de guidage de lumière (20) et émise depuis la totalité de la plaque de guidage de lumière (20) ;
le réfrigérateur comprenant en outre des cache-lampes (6) qui recouvrent les DEL (3) et sont fournis entre les DEL (3) et la plaque de guidage de lumière (20), lesdits cache-lampes (6) étant adaptés pour permettre à la lumière émise par les DEL de passer à travers le cache-lampe respectif (6) pour entrer dans la plaque de guidage de lumière respective (20), les cache-lampes (6) comportent une partie opaque ou anti-éblouissement située devant la pluralité respective de DEL (3) ainsi traitée pour réduire la visibilité des DEL (3).

10. Réfrigérateur (1) selon la revendication 9,
dans lequel
la partie arrière de chaque paroi latérale (8) du compartiment de stockage (2) comporte une section inclinée dont une partie arrière est inclinée vers le côté du compartiment de stockage (2), et l'extrémité arrière de la section inclinée est raccordée à une extrémité latérale d'une surface arrière du compartiment de stockage (2) ; et
la chambre d'éclairage (4) est disposée dans la section inclinée.

11. Réfrigérateur (1) selon la revendication 9, dans lequel
les plaques de guidage de lumière (20) comportent, au niveau d'une partie arrière de celles-ci, des sections coudées (24) qui sont coudées vers des côtés externes du compartiment de stockage (2) ; et
les DEL (3) sont disposées opposées à une surface d'extrémité des sections coudées (24).

12. Réfrigérateur (1) selon la revendication 9, dans lequel un panneau métallique est fourni au niveau d'une surface arrière du compartiment de stockage (2).

13. Réfrigérateur (2) selon la revendication 1 ou 9, comprenant en outre :
une pluralité de plateaux transparents qui sont agencés à l'intérieur du compartiment de stockage (2) et sur lesquels un article à stocker est placé,
dans lequel
les DEL (3) sont disposées au voisinage des plateaux.

14. Réfrigérateur (1) selon l'une quelconque des revendications 1 à 12,
dans lequel
les plaques de guidage de lumière (20) ont une partie de surface rugueuse (21) qui fait face à la paroi latérale et s'étend de l'arrière vers l'avant.

15. Réfrigérateur (1) selon l'une quelconque des revendications 1 à 12, dans lequel les plaques de guidage de lumière (20) sont fabriquées en résine de polystyrène.

16. Réfrigérateur (1) selon l'une quelconque des revendications 1 à 12, dans lequel une surface réfléchissante est formée avec la partie d'une surface de chaque paroi latérale du compartiment de stockage (2) qui fait face aux plaques de guidage de lumière respectives (20).
